# EUROPÄISCHE PATENTANMELDUNG

(11) **EP 1 189 461 A2**
(43) Veröffentlichungstag der Anmeldung: **20.03.2002**
(21) Anmeldenummer: 01119454.5
(22) Anmeldetag: 13.08.2001
(51) Int. Cl.: H04Q 3/00

(54) **Verteiltes Kommunikationssystem**

(30) Priorität: 19.09.2000 DE 10046313
(71) Anmelder: SIEMENS AKTIENGESELLSCHAFT, 80333 München (DE)
(72) Erfinder: Luegger, Volker, 58730 Froendenberg (DE); Neuhaus, Ralf, 44534 Luenen (DE); Uecker, Rainer, 45472 Muelheim (DE)

(57) **Zusammenfassung**

Das vorliegende verteilte Kommunikationssystem besteht aus zumindest einer Kommunikationseinrichtung (7) - vorzugsweise einer privaten Kommunikationsanlage - und zumindest einer zentralen Datenverarbeitungseinrichtung (1) die über ein Netzwerk - vorzugsweise ein IP-orientiertes Netzwerk - miteinander verbunden sind. Durch die zumindest eine zentrale Datenverarbeitungseinrichtung (1) wird mindestens eine Kommunikationsanwendung (2a,...,2n) ausgeführt. Des weiteren ist im Kommunikationssystem eine zentrale Datenbank (3) zur Speicherung von übergreifenden Daten, auf die von mindestens einer Kommunikationseinrichtung (7) und/oder mindestens einer Kommunikationsanwendung (2a,...,2n) zugegriffen wird angeordnet.

## Beschreibung

Die vorliegende Erfindung betrifft ein verteiltes Kommunikationssystem gemäß dem Oberbegriff des Patentanspruchs 1.

Moderne Kommunikationssysteme bestehen häufig aus mehreren räumlich verteilten, untereinander verbundenen Kommunikationsanlagen. Jede dieser Kommunikationsanlagen verfügt dabei über eine eigene Vermittlungsintelligenz und eine eigene lokale Datenbank zur Speicherung von kommunikationsanlagen-spezifischen Daten. Die lokalen kommunikationsanlagen-spezifischen Datenbanken dienen dabei einer Speicherung von für einen eigenständigen Betrieb - in der Literatur häufig als 'Standalone-Betrieb' bezeichnet - einer Kommunikationsanlage notwendigen Daten, beispielsweise von Teilnehmernummern, Berechtigungen, Amtsleitungen, Durchwahlnummern, Rufnummern, Konfigurationsdaten, Kurzwahlzielen, usw. Um aus diesen Kommunikationsanlagen einen Netzverbund von vernetzten Kommunikationsanlagen zu realisieren, müssen die einzelnen Kommunikationsanlagen jeweils für sich entsprechend konfiguriert werden, d.h. mit den in den anderen Kommunikationsanlagen gespeicherten Daten abgeglichen werden.

Zur Erweiterung der Funktionalität kann innerhalb des Kommunikationssystems eine zentrale Datenverarbeitungseinrichtung - in der Literatur häufig als Server bezeichnet - vorgesehen sein, durch die zusätzliche Kommunikationsanwendungen realisiert werden. Der Server und die Kommunikationsanlagen sind dabei untereinander über ein Netzwerk verbunden, über das ein bidirektionaler Datentransfer realisiert wird. Beispiele für eine derartige Erweiterung des Funktionsumfangs eines Kommunikationssystems sind ACD-Lösungen (Automatic Call Distribution), Call-Center-, Hotel- oder CTI-Anwendungen (Computer Telephonie Integration).

Zusätzlich zu den lokalen Datenbanken der Kommunikationsanlagen verfügt der Server in der Regel ebenfalls über eine eigene server-spezifische Datenbank, in der die für den Ablauf der jeweiligen im Server implementierten Anwendung relevanten Daten abgelegt werden. Bei einer Call-Center-Anwendungen sind dies z.B. Informationen über die Namen und Rufnummern der einzelnen Call-Center-Agenten.

Hierbei kommt es häufig vor, dass bestimmte Daten, wie z.B. der Name und die Rufnummer eines Teilnehmers, von mehreren Einrichtungen innerhalb des Kommunikationssystems - von Kommunikationsanlagen und/oder dem Server - benötigt werden. Derartige Daten werden im folgenden als übergreifende Daten bezeichnet. Bei der Lösung gemäß dem Stand der Technik müssen diese übergreifenden Daten dazu sowohl in den lokalen Datenbanken der jeweiligen Kommunikationsanlagen als auch in der Datenbank des Servers für jede Anwendung geändert werden.

Betrachtet man nun die Vielzahl von verschiedenen Kommunikationsanwendungen und -anlagen, müssen geänderte Daten an einer Vielzahl von Stellen innerhalb des Kommunikationssystems aktualisiert werden. Ein Nachteil dieser Lösung besteht darin, dass eine Pflege und Wartung der Datenbanken aufgrund der Menge der zu administrierenden Daten sehr aufwendig und fehlerträchtig ist. Zusätzlich kann es bei einer manuellen Administration der Kommunikationsanlagen dazu kommen, dass falsche Daten eingegeben werden.

Aus der WO 93/17515 ist bereits ein Verfahren "area wide centrex" bekannt, bei welchem in einem Kommunikationsnetz mehrere Kommunikationsanlagen angeordnet sind. Im Kommunikationsnetz ist weiterhin eine zentrale Datenbasis vorgesehen, in der teilnehmerspezifische Daten von Teilnehmern gespeichert sind, die an verschiedenen Kommunikationsanlagen angeschlossen sein können. Diese Teilnehmer bilden eine Benutzergruppe, die sich internen und externe Anrufern so darstellt, als ob alle Teilnehmer der Benutzergruppe an einer einzigen Kommunikationsanlage angeschlossen wären. Dazu wird beim Verbindungsaufbau innerhalb dieser Benutzergruppe anhand einer lokalen Datenbasis der Kommunikationsanlage des rufenden Teilnehmers, in der die teilnehmerspezifischen Daten aller lokaler Teilnehmer abgelegt sind, festgestellt, ob der gerufene Teilnehmer an derselben Kommunikationsanlage angeschlossen ist. Ist dies der Fall, wird der Anruf durch eine interne Verbindung innerhalb dieser Kommunikationsanlage durchgeschaltet. Falls der gerufene Teilnehmer nicht in der lokalen Datenbasis verzeichnet ist, wird eine Anfrage an die zentrale Datenbasis gesendet, in der teilnehmerspezifische Daten aller Teilnehmer der Benutzergruppe gespeichert sind, welche an die Kommunikationsanlage des rufenden Teilnehmers die zum Verbindungsaufbau benötigten Daten übermittelt. Die gleiche Anfrage erfolgt an die zentrale Datenbasis, wenn ein externer Anruf für einen Teilnehmer der Benutzergruppe nicht innerhalb der Kommunikationsanlage vermittelt werden kann.

In der lokalen Datenbasis jeder Kommunikationsanlage sind also die teilnehmerspezifischen Daten der lokal angeschlossenen Teilnehmer verzeichnet. Die zentrale Datenbasis enthält ebenfalls teilnehmerspezifische Daten aller Teilnehmer der Benutzergruppe. Diese teilnehmerspezifischen Daten sind eine Kopie der entsprechenden Daten aus den lokalen Datenbasen. In der zentralen Datenbasis enthalten sind darüber hinaus noch Daten, die die Kommunikationsbeziehungen zwischen den Teilnehmern der übergeordneten Benutzergruppe definieren.

Der Nachteil dieser Lösung besteht darin, dass identische teilnehmerspezifische Daten an mehreren Stellen vorhanden sein müssen. Eine Konsistenz der Daten, die einerseits lokal in den Datenbanken der Kommunikationseinrichtungen geführt werden und auf der anderen Seite parallel dazu in der zentralen Datenbasis gespeichert sind, ist Voraussetzung für einen störungsfreien Betrieb. Änderungen von teilnehmerspezifischen Daten müssen also stets in mindestens zwei Datenbasen durchgeführt werden.

Weiter ist aus der US 59 20 619 A ein als Regional CENTREX bezeichnetes Verfahren bekannt, bei dem geschlossene Benutzergruppen in einem öffentlichen Kommunikationsnetz mit mehreren Kommunikationsanlagen über die Grenzen einer einzelnen Kommunikationsanlage hinweg gebildet werden. Die Teilnehmer jeder Benutzergruppe können andere Teilnehmer derselben Gruppe unter Verwendung einer internen Rufnummer erreichen, auch wenn diese Teilnehmer an einer anderen entfernten Kommunikationsanlage angeschlossen sind. Jede Kommunikationsanlage, an der mindestens ein Teilnehmer der geschlossenen Benutzergruppe angemeldet ist, enthält eine Datenbasis, in der teilnehmerspezifische Daten aller Teilnehmer derselben Benutzergruppe verzeichnet sind und in der jedem Teilnehmer neben der internen Rufnummer eine eindeutige externe Rufnummer zugeordnet ist, die zur Verbindung über das öffentliche Kommunikationsnetz verwendet wird. Bei Gesprächen, die über eine einzelne Kommunikationsanlage hinausgehen, wird dazu anhand dieser Datenbasis eine Umwertung der internen in die zugeordnete externe Rufnummer vorgenommen und umgekehrt bei eingehenden Rufen aus der geschlossenen Benutzergruppe eine Umwertung der externen in die interne Rufnummer.

Ferner ist aus der DE 43 29 172 A1 ein ähnliches Verfahren wie das in der US 59 20 619 A offenbarte bekannt. Beschrieben ist ein Kommunikationsnetz, welches aus einem zentralen Dienstrechner und mehreren Kommunikationsanlagen in einem öffentlichen Netz besteht. Der zentrale Dienstrechner enthält eine zentrale Datenbasis, die alle diejenigen Daten umfasst, die zur Herstellung eines virtuellen privaten Netzwerkes notwendig sind. Zu diesen Daten gehören auf der einen Seite Daten, die die Kommunikationsbeziehung der Teilnehmer untereinander definieren, beispielsweise einen privaten Nummerierungsplan, und auf der anderen Seite eine Kopie aller teilnehmerspezifischen Daten der jeweiligen Teilnehmer aus den lokalen Datenbasen der einzelnen Kommunikationsanlagen. Anhand der abgespeicherten Informationen vermittelt der zentrale Dienstrechner sowohl interne Anrufe zueinander, als auch externe Anrufe zu internen Teilnehmern.

Die Aufgabe der Erfindung ist es, das Ändern von übergreifenden Daten zu vereinfachen und gleichzeitig einen störungsfreien Betrieb des Kommunikationssystems zu gewährleisten.

Erfindungsgemäß wird die Aufgabe ausgehend vom Oberbegriff des Patentanspruchs 1 durch dessen kennzeichnende Merkmale gelöst.

Gemäß der vorliegenden Erfindung werden übergreifende Daten, d.h. Daten, auf die von mehreren Einheiten - Kommunikationsanlagen und/oder auf Datenverarbeitungseinrichtungen laufenden Kommunikationsanwendungen - zugegriffen wird, in einer zentralen Datenbank gespeichert.

Ein Vorteil der vorliegenden Erfindung besteht unter anderem darin, daß übergreifende Daten, die an mehreren Stellen im Kommunikationssystem benötigt werden, nur noch zentral an einer Stelle, d.h. in der zentralen Datenbank, verwaltet und administriert werden müssen. Werden Daten in dieser zentralen Datenbank geändert, so stehen sie nach dieser Änderung für alle berechtigten Kommunikationsanlagen und Kommunikationsanwendungen sofort zur Verfügung.

Vorteilhafte Ausgestaltungen der vorliegenden Erfindung sind in den Unteransprüchen angegeben.

Die zentrale Datenbank kann alternativ in einer zentralen Datenverarbeitungseinrichtung - im folgenden als Server bezeichnet - oder in einer Kommunikationsanlage implementiert werden.

Ist die zentrale Datenbank in einer Kommunikationsanlage implementiert, so wird ein Zugriff von außen, d.h. ausgehend vom Server oder von einer anderen Kommunikationsanlage, durch eine in der Kommunikationsanlage vorgesehene lokale Zugriffseinrichtung ermöglicht.

In diesem Fall verfügt der Server über eine zentrale Zugriffseinrichtung, über die berechtigte, auf dem Server ablaufende Kommunikationsanwendungen auf die in der zentralen Datenbank der Kommunikationsanlage abgespeicherten übergreifenden Daten zugreifen können. Sind in dem Kommunikationssystem weitere Kommunikationsanlagen vorhanden, so können diese jeweils über eine eigene lokale Zugriffseinrichtung auf die zentrale Datenbank der entsprechenden Kommunikationsanlage zugreifen.

Ist die zentrale Datenbank alternativ im Server implementiert, so wird der Zugriff von außen, d.h. ausgehend von einer Kommunikationsanlage, ebenfalls durch eine im Server implementierte zentrale Zugriffseinrichtung ermöglicht.

In diesem Fall verfügen die Kommunikationsanlagen für einen Zugriff auf die zentrale Datenbank des Servers ebenfalls jeweils über eine lokale Zugriffseinrichtung, mittels derer die Kommunikationsanlagen auf die übergreifenden Daten der zentralen Datenbank des Servers zugreifen können.

Der Zugriff von außen auf die zentrale Datenbank wird beispielsweise durch eine sogenannte Kapselung der zentralen Datenbank erreicht. Durch eine objektorientierte Programmierung stehen über die Technik der Kapselung für jede autorisierte Einheit des Kommunikationssystems, d.h. für jede Kommunikationsanlage und Kommunikationsanwendung, spezielle Zugriffsfunktionen für einen Zugriff auf die in der zentralen Datenbank gespeicherten Daten zur Verfügung.

Der Server und die Kommunikationsanlagen können zusätzlich über jeweils eine lokale Datenbank verfügen. In diesen lokalen Datenbanken werden dabei lokale Daten gespeichert, d.h. Daten, die jeweils nur für den Betrieb des Servers bzw. der jeweiligen Kommunikationsanlage benötigt werden.

Das betrachtete - vorzugsweise private - Kommunikationssystem muß nicht zwangsläufig einen Server zur Realisierung von Kommunikationsanwendungen beinhalten. Alternativ ist auch eine Konfiguration möglich, bei der lediglich mehrere untereinander vernetzte Kommunikationsanlagen enthalten sind. Die zentrale Datenbank wird in diesem Fall in einer der Kommunikationsanlage implementiert, wobei ein Mechanismus für einen Zugriff der weiteren Kommunikationsanlagen auf die zentrale Datenbank in der entsprechenden Kommunikationsanlage implementiert ist.

Die vorliegende Erfindung wird nachfolgend anhand bevorzugter Ausführungsbeispiele unter Bezugnahme auf die beigefügten Zeichnungen näher erläutert.

Dabei zeigen
- Fig. 1:: ein Strukturbild zur schematischen Darstellung eines erfindungsgemäßen Kommunikationssystems mit einer zentralen, in einem Server implementieren Datenbank; und
- Fig. 2:: ein Strukturbild zur schematischen Darstellung des erfindungsgemäßen Kommunikationssystems mit einer zentralen, in einer Kommunikationsanlage implementiert Datenbank.

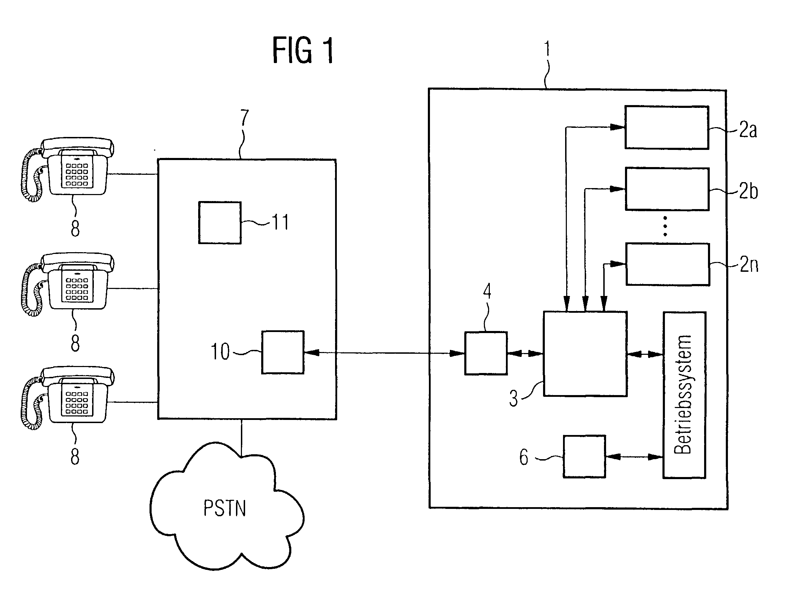

Fig. 1 zeigt in einer schematischen Darstellung ein Kommunikationssystem, bestehend aus einer Kommunikationsanlage 7 und einem mit der Kommunikationsanlage verbundenen Server 1. Die Kommunikationsanlage 7 dient dabei einem Anschluß von Endgeräten 8, beispielsweise von Telefonen oder von Datenverarbeitungseinrichtungen, an das Kommunikationssystem. Des weiteren verfügt die Kommunikationsanlage 7 über einen Anschluß an ein öffentliches Kommunikationsnetz PSTN (Public Switched Telephone Network). Alternativ können im Kommunikationssystem mehrere Kommunikationsanlagen angeordnet sein, die über ein - nicht dargestelltes - Netzwerk untereinander und mit Server verbunden sind.

Auf dem Server 1 laufen mehrere Kommunikationsanwendungen 2a,...,2n, z.B. Call-Center-Anwendungen, Text-to-Speech-Anwendungen oder ACD-Anwendungen ab. Die Steuerung des Servers 1 erfolgt durch ein Betriebssystem (z.B. Windows NT), das unter anderem die Ablaufsteuerung der Kommunikationsanwendungen 2a,...,2n durchführt und einen Zugriff auf lokale oder übergreifende Daten des Kommunikationssystems steuert.

Im vorliegenden Ausführungsbeispiel ist eine zentrale Datenbank 3 des Kommunikationssystems im Server 1 implementiert. Die zentrale Datenbank 3 dient dabei einer Speicherung von übergreifenden Daten. Unter übergreifenden Daten werden dabei Daten verstanden, auf die von mehreren Einheiten des Kommunikationssystems, d.h. ausgehend von einer Kommunikationsanlage 7 und/oder von einer auf dem Server 1 ablaufenden Kommunikationsanwendung 2a,...,2n, zugegriffen wird.

Der Zugriff auf die zentrale Datenbank 3 durch die Kommunikationsanlage 7 wird durch eine erste zentrale Zugriffseinrichtung 4 im Server 1 bzw. durch eine erste lokale Zugriffseinrichtung 10 in der Kommunikationsanlage 7 ermöglicht.

Der Server 1 verfügt zusätzlich zur zentralen Datenbank 3 über eine lokale Datenbank 6. In der lokalen Datenbank 6 werden bevorzugt server-spezifische Daten abgespeichert, d.h. Daten, die ausschließlich zum Betrieb des Servers 1 benötigt werden. Die Kommunikationsanlage 7 verfügt ebenfalls über eine lokale Datenbank 11 zur Speicherung von kommunikationsanlagen-spezifischen Daten, d.h. von Daten, die ausschließlich zum Betrieb der Kommunikationsanlage 7 benötigt werden.

Der Server 1 und die Kommunikationsanlage 7 sind beispielsweise über ein - nicht dargestelltes - Ethernet-LAN (Local Area Network) miteinander verbunden. Über das Netzwerk erfolgt dabei eine bidirektionale Übertragung der übergreifenden Daten. Weiterhin erfolgt im Falle von mehreren vernetzten Kommunikationsanlagen oder bei entsprechenden im Server 1 implementierten Kommunikationsanwendungen 2a,...,2n eine bidirektionale Übermittlung von Sprachdaten über dieses Netzwerk.

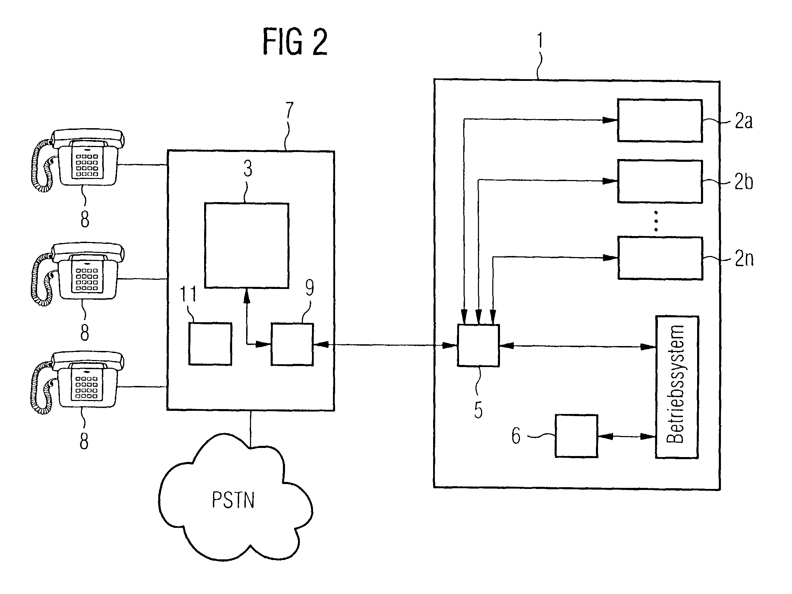

Fig. 2 zeigt ein weiteres Ausführungsbeispiel der vorliegenden Erfindung, bei der im Gegensatz zum ersten Ausführungsbeispiel die zentrale Datenbank 3 des Kommunikationssystems in der Kommunikationsanlage 7 implementiert ist.

In diesem Fall wird ein Zugriff auf die zentrale Datenbank 3 von außen, d.h. beispielsweise durch den Server 1 oder durch eine weitere - nicht dargestellte - Kommunikationsanlage 7 innerhalb des Kommunikationssystems durch eine zweite lokale Zugriffseinrichtung 9 in der Kommunikationsanlage 7 realisiert. Zusätzlich weist der Server 1 eine zweite zentrale Zugriffseinrichtung 5 auf, die einen Zugriff auf die zentrale Datenbank 3 ausgehend von einer auf dem Server 1 ablaufenden Kommunikationsanwendung 2a,...,2n steuert. Ein Zugriff auf die zentrale Datenbank 3 ausgehend von einer oder mehreren weiteren - nicht dargestellten - Kommunikationsanlagen 7 erfolgt über die in den Kommunikationsanlagen 7 jeweils implementierten ersten lokalen Zugriffseinrichtungen 10.

Gemäß der vorliegenden Erfindung werden alle übergreifend benötigten Daten innerhalb des Kommunikationssystems in der zentralen Datenbank 3 abgelegt, gepflegt und administriert.

Die zentrale Datenbank 3 enthält dabei ein Interface - die erste zentrale Zugriffseinrichtung 4 gemäß dem ersten Ausführungsbeispiel bzw. die zweite lokale Zugriffseinrichtung 9 gemäß dem zweiten Ausführungsbeispiel - über das eine Zugriffsmöglichkeit von außen auf bestimmte übergreifend relevante Daten - oder auch Datenbereiche - ermöglicht wird.

Zu diesem Zweck kann eine Kapselung der Datenbasis als COM-, Active-X- oder CORBA-Objekt erfolgen. Für den Zugriff auf die zentrale Datenbank 3 stehen über die Kapselung spezielle Zugriffsfunktionen zur Verfügung. Jede autorisierte Einheit, d.h. bei der vorliegenden Erfindung sowohl Kommunikationsanlagen als auch Kommunikationsanwendungen, können über dieses Interface direkt auf die zentrale Datenbank 3 zugreifen, d.h. die gewünschten Daten lesen, verändern oder für eine weitere Verarbeitung nutzen.

Durch die Kapselung der zentralen Datenbank 3 und die Zugriffsmöglichkeiten über das Netzwerk innerhalb des Kommunikationssystems ist es nicht von Bedeutung, ob eine derart gekapselte Datenbank in einer Kommunikationsanlage 7 oder in einem Server 1 implementiert ist. Sobald Daten in der gekapselten zentralen Datenbank 3 geändert werden, stehen diese sofort ohne weitere Aktionen sowohl den jeweiligen Kommunikationsanlagen 7 als auch den einzelnen Kommunikationsanwendungen 2a,...,2n zur Verfügung.

## Patentansprüche

1. Kommunikationssystem, bestehend aus zumindest einer Kommunikationseinrichtung (7) und zumindest einer zentralen Datenverarbeitungseinrichtung (1),
die über ein Netzwerk miteinander verbunden sind,
wobei durch die zumindest eine zentrale Datenverarbeitungseinrichtung (1) mindestens eine Kommunikationsanwendung (2a,...,2n) ausgeführt wird und
wobei übergreifende Daten vorhanden sind, auf die von mindestens einer Kommunikationseinrichtung (7) und/oder mindestens einer Kommunikationsanwendung (2a,...,2n) zugegriffen wird,
**dadurch gekennzeichnet,**
**dass** zumindest ein Teil der übergreifenden Daten an einer Stelle im Kommunikationssystem gespeichert sind und
**dass** mindestens eine Kommunikationseinrichtung (7) und mindestens eine Kommunikationsanwendung (2a,...,2n) oder mindestens zwei Kommunikationseinrichtungen (7) bei Nutzung dieser Daten auf diese Stelle zugreifen.

2. Kommunikationssystem nach Anspruch 1,
**dadurch gekennzeichnet,**
**dass** die übergreifenden Daten in einer zentralen Datenbank (3) gespeichert sind.

3. Kommunikationssystem nach Anspruch 1 oder 2,
**dadurch gekennzeichnet,**
**dass** alle übergreifenden Daten in der zentralen Datenbank (3) gespeichert sind und
**dass** jede Kommunikationseinrichtung (7) und jede Kommunikationsanwendung (2a,...,2n) bei Nutzung dieser Daten auf diese Datenbank (3) zugreift.

4. Kommunikationssystem nach einem der Ansprüche 2 oder 3,
**dadurch gekennzeichnet,**
**daß** die zentrale Datenbank (3) in der zumindest einen zentralen Datenverarbeitungseinrichtung (1) implementiert ist.

5. Kommunikationssystem gemäß Anspruch 4,
**dadurch gekennzeichnet,**
**daß** in der zumindest einen zentralen Datenverarbeitungseinrichtung (1) eine erste zentrale Zugriffseinrichtung (4) für eine Steuerung eines Zugriffs von außerhalb der Datenverarbeitungseinrichtung (1) auf die zentrale Datenbank (3) vorgesehen ist.

6. Kommunikationssystem gemäß Anspruch 4 oder 5,
**dadurch gekennzeichnet,**
**daß** in der zumindest einen Kommunikationseinrichtung (7) eine erste lokale Zugriffseinrichtung (10) für eine Steuerung eines Zugriffs der Kommunikationseinrichtung (7) auf die zentrale Datenbank (3) vorgesehen ist.

7. Kommunikationssystem gemäß Anspruch 2,
**dadurch gekennzeichnet,**
**daß** die zentrale Datenbank (3) in der zumindest einen Kommunikationseinrichtung (7) implementiert ist.

8. Kommunikationssystem gemäß Anspruch 7,
**dadurch gekennzeichnet,**
**daß** in der zumindest einen zentralen Datenverarbeitungseinrichtung (1) eine zweite zentrale Zugriffseinrichtung (5) für eine Steuerung eines Zugriffs einer Kommunikationsanwendung (2a,...,2n) auf die zentrale Datenbank (3) vorgesehen ist.

9. Kommunikationssystem gemäß Anspruch 7 oder 8,
**dadurch gekennzeichnet,**
**daß** in der zumindest einen Kommunikationseinrichtung (7) eine zweite lokale Zugriffseinrichtung (9) für eine Steuerung eines Zugriffs von außerhalb der Kommunikationseinrichtung (7) auf die zentrale Datenbank (3) vorgesehen ist.

10. Kommunikationssystem nach einem der Ansprüche 2 bis 9,
**dadurch gekennzeichnet,**
**daß** die zentrale Datenbank (3) gekapselt ist.

11. Kommunikationssystem nach einem der Ansprüche 2 bis 10, **gekennzeichnet durch**
eine in der zumindest einen zentralen Datenverarbeitungseinrichtung (1) implementierten lokalen Datenbank (6) zum Abspeicherung von Daten, die ausschließlich den Betrieb der Datenverarbeitungseinrichtung (1) betreffen.

12. Kommunikationssystem nach einem der Ansprüche 2 bis 11, **gekennzeichnet durch**
eine in der zumindest einen Kommunikationseinrichtung (7) implementierten lokalen Datenbank (11) zum Abspeichern von Daten, die ausschließlich den Betrieb der Kommunikationseinrichtung (7) betreffen.

13. Kommunikationssystem nach einem der vorhergehenden Ansprüche,
**dadurch gekennzeichnet,**
**daß** das Netzwerk ein IP-orientiertes (Internet Protocol) Netzwerk ist.

14. Kommunikationssystem nach einem der vorhergehenden Ansprüche,
**dadurch gekennzeichnet,**
**daß** die Kommunikationseinrichtung (7) eine private Kommunikationsanlage ist.
